# EUROPEAN PATENT SPECIFICATION

(11) **EP 4 464 540 B1**
(45) Date of publication and mention of the grant of the patent: **05.08.2026**
(21) Application number: 23173378.3
(22) Date of filing: 15.05.2023
(51) Int. Cl.: B60L 53/16

(54) **CHARGING PORT ASSEMBLY AND VEHICLE COMPRISING A CHARGING PORT ASSEMBLY**
LADEANSCHLUSSANORDNUNG UND FAHRZEUG MIT EINER LADEANSCHLUSSANORDNUNG
ENSEMBLE PORT DE CHARGE ET VÉHICULE COMPRENANT UN ENSEMBLE PORT DE CHARGE

(43) Date of publication of application: 20.11.2024
(73) Proprietor: Volvo Car Corporation, 405 31 Göteborg (SE)
(72) Inventor: ÅBERG, Tobias, 40531 Göteborg (SE)
(74) Representative: Kransell & Wennborg KB

(56) References cited:
- CN-A- 113 594 758

## Description

### TECHNICAL FIELD

The present disclosure relates to a charging port assembly and a vehicle comprising a charging port assembly.

### BACKGROUND ART

Charging port assemblies, e.g., for charging batteries of an electric vehicle or a hybrid electric vehicle, are provided in a vehicle body. The charging port assembly comprises a lid, a flap etc., configured to cover the inside of the charging port assembly. Usually, a sealing is provided to seal the lid such that the inside of the charging port assembly is protected from contamination while the lid is closed. Furthermore, it is common to use common parts for all markets, like Europe, the United States, China, Japan etc. One charging port assembly is known from CN 113 758 A. The sealing as well as the common parts contribute to an increase in the overall size of the charging port assembly.

### SUMMARY

There may, therefore, be a need to provide an improved charging port assembly, which allows reducing the overall size of the charging port assembly, and particularly improving robustness of the charging port assembly. Additionally, it allows simplifying a design and/or styling of the charging port assembly.

The object of the present disclosure is at least partially solved or alleviated by the subject-matter of the appended independent claims, wherein further examples are incorporated in the dependent claims.

According to a first aspect, there is provided a charging port assembly for a vehicle. The charging port assembly comprises an interface holding element, a housing, a cover element and a sealing member. The interface holding element is insertable into the vehicle and configured to hold an interface member in position. The housing is configured to be mountable on the vehicle and has a passage opening for providing access to the interface member. The cover element is configured to releasably close the passage opening of the housing. The sealing member is arranged at the interface holding element and configured to sealingly connect the interface holding element and the housing. Further, the sealing member is configured to be deformed when the cover element is in a closed position to seal the passage opening of the housing.

Thus, the sealing member is capable of connecting the interface holding element and the housing such that the connection interface is sealed. Further, particularly simultaneously, the sealing member is configured to seal off the passage opening of the housing by forming a sealing contact with the cover element, when the cover element is in the closed position.

The charging port assembly is reduced in size while being usable with interface members for different markets, particularly markets all over the world, e.g., Europe, the United States, China, Japan etc. The interface holding element may be formed individually for each of the different markets or may be uniformly shaped for all markets. This means, the interface holding element may be the same for all different markets. Furthermore, it may be possible that the interface member may be a common interface member, this means an interface member applicable in markets all over the world, e.g., Europe, the United States, China, Japan etc. The interface member may comprise a socket or an outlet being suitable for at least a specific plug, e.g., a European-type plug, an US-type plug etc., and particularly being suitable for all types of plugs, more particularly all types of plugs being used with charging station for charging vehicles.

The reduced size of the charging port assembly allows reducing the size of the cover element, thereby increasing a robustness of the cover element and the charging port assembly. Furthermore, the charging port assembly allows a shallow housing, thereby reducing a risk of contamination, such as dust and/or water, being present inside the housing. Additionally, the shallow housing may be simpler to produce, thereby reducing costs, e.g., by allowing to simplify a tool for manufacturing the housing. The sealing member may be formed of a soft component and capable of sealing off the inside of the charging port assembly, when the cover element is closed and capable of sealing off an interface between the interface holding element and the housing, particularly between the interface holding element and the passage opening of the housing. Furthermore, the sealing member may be configured to compensate tolerances, such as position tolerances, manufacturing tolerances, etc., particularly between the passage opening of the housing and the interface holding element.

In other words, the charging port assembly allows reducing costs and increasing robustness, particularly by allowing a smaller sized cover element, as well as reducing contamination, particularly by allowing a shallow housing. Furthermore, the charging port assembly allows simplifying a handling of the tolerances between the housing and the interface holding element. Thus, the charging port assembly allows reducing a complexity compared to known, existing solutions.

According to an example, the sealing member may be formed in one piece.

Thus, the sealing member may handle three functions, namely sealing the interface between the interface holding element and the housing, sealing off the inside of the charging port assembly, particularly the passage opening, when the cover element is closed, and compensate the tolerances between the housing and the interface holding element, particularly in all spatial directions. Known solutions usually comprise a soft component wall to compensate the tolerance between the housing and the interface holding element, and two separate sealing elements, one of which is used for sealing off the inside of the charging port assembly, when the cover element is closed, and the other one is used for sealing an interface between the interface holding element and the soft component wall. Thus, forming the sealing member in one piece may provide a simplified solution that allows reducing the overall number of components by replacing three separate sealing components by the one sealing member. This may allow reducing the overall size of the charging port assembly, particularly may allow a shallower design of the housing, and thus may allow reducing costs. The shallow housing may have a less complex structure and/or may allow reducing contamination inside the charging port assembly, particularly in the inside of the housing.

According to an example, the cover element may comprise at least one protrusion protruding towards the sealing member and configured to deform the sealing member, when the cover element is in the closed position.

The at least one protrusion may be arranged on an inner surface of the cover element, the inner surface being a surface facing towards the interface holding element, when the cover element is closed. The at least one protrusion may protrude towards the interface holding element, when the cover element is closed, and may particularly protrude towards the sealing member such that the at least one protrusion may reach the sealing member being arranged on the interface holding element, when the cover element is closed. The contact between the at least one protrusion and the sealing member may seal off the inside of the charging port assembly, thereby reducing or even preventing contamination like dust, water etc., from entering the inside of the charging port assembly while the cover element is closed.

According to an example, the protrusion may form a closed contour configured to deform the sealing member, when the cover element is in the closed position to seal off the passage opening circumferentially.

By sealing off the interface between the cover element in the closed state and the interface holding element along the entire circumference of the cover element, the entry of contamination into the inside of the charging port assembly may be significantly reduced or even prevented. The closed contour may be formed integrally with the cover element, or may be attached to the cover element, e.g., by adhesion, by over molding etc. Additionally, or alternatively, the closed contour may be formed as one piece or may be formed by at least two pieces contacting each other.

According to an example, the housing may be arranged to at least partially overlap with the interface holding element in a longitudinal direction. Alternatively, the housing may be arranged having a distance to the interface holding element in the longitudinal direction.

The longitudinal direction may substantially correspond to an extension direction of a normal onto the inner surface of the cover element when the cover element is closed. In other words, the longitudinal direction may substantially correspond to an extension direction of the passage opening of the housing. An amount of the overlap and/or the distance may depend on tolerances resulting from manufacturing processes of the housing and/or the interface holding element. In particular, the sealing member may be formed such that the interface between the housing and the interface holding element may be sealed by at least a part of the sealing member, regardless of the actual tolerances. In other words, the sealing member may be configured to ensure sealing the interface between the housing and the interface holding element for every possible amount of overlap or distance, respectively, in the longitudinal direction, resulting from the permitted tolerances for the housing and/or the interface holding element.

According to an example, an inner circumference of the passage opening may be equal to or larger than an outer circumference of the interface holding element. By this, the assembling of the charging port assembly may be ensured regardless of manufacturing tolerances due to a manufacturing process of the housing and/or the interface holding element as well as positioning tolerances which may occur due to chain tolerances during assembly.

According to an example, the sealing member may be arranged such that the sealing member seals a circumferential gap being formed between the inner circumference of the passage opening and the outer circumference of the interface holding element. The gap may extend in a direction being substantially orthogonal to the longitudinal direction Thus, the sealing member may be at least partially arranged within the gap.

According to an example, the gap may be substantially constant along the circumferences or the gap varying along the circumferences. Whether the gap may be substantially constant or may vary along the circumferences may depend on the positional tolerance between the passage opening of the housing and the interface holding element. In other words, given that the inner circumference of the passage opening and the outer circumference of the interface holding element substantially have the same shape, in case the inner circumference of the passage opening and the outer circumference of the interface holding element may be aligned, a size of the gap may be substantially constant along the circumferences. In contrast to that, the size of the gap may vary along the circumferences due to misalignment of the inner circumference of the passage opening and the outer circumference of the interface holding element, resulting from positional tolerances. Additionally, or alternatively, the size of the gap may vary along the circumferences due to different shapes of the respective circumferences. For example, the inner circumference of the passage opening may be substantially rectangular in shape whereas the outer circumference of the interface holding element may be substantially oval in shape. Thus, the sealing member may be formed and/or arranged so that it may be able to compensate for the variations in the gap size if necessary, thereby ensuring a sealed connection between the housing and the interface holding element.

According to an example, the sealing member may be at least partially arranged at an edge of the interface holding element facing towards the cover element in the closed position. Please note that "facing towards the cover element in the closed position" should be understood as a general indication of direction, which means that the edge does not have to be completely aligned in this direction, but is merely arranged essentially pointing in this direction.

By arranging the sealing member at least partially at the edge of the interface holding element facing towards the cover element in the closed position, the sealing member may be arranged such that it is exposed to the cover element as well as to the housing. In other words, the sealing member being arranged at least partially at the edge of the interface holding element facing towards the cover element in the closed position may allow the sealing member to contact the cover element, when the cover element is closed, as well as to contact the housing, in an assembled state of the charging port assembly, such that the housing and the interface holding element are sealingly connected by the sealing member.

According to an example, the sealing member may have a L-like shaped profile, wherein one leg of the L-like shaped profile may be at least partially arranged at the edge of the interface holding element facing towards the cover element in the closed position and configured to be deformed by the cover element, when the cover element is in the closed position, and another leg of the L-like shaped profile may be arranged to seal the gap between the inner circumference of the passage opening and the outer circumference of the interface holding element. Alternatively, the sealing member may have a J-like shaped profile or a U-like shaped profile.

A L-like shaped profile, a J-like shaped profile and/or a U-like shaped profile may provide at least two legs extending in different directions, thereby providing a sealing contact in these two different directions. The leg being arranged to seal the gap between the housing and the interface holding element, particularly the gap between the inner circumference of the passage opening and the outer circumference of the interface holding element, may be shaped to ensure sealing the gap between the housing and the interface holding element for every possible gap size resulting from the permissible tolerances for the housing and/or the interface holding element, particularly in the longitudinal direction as well as in the direction substantially orthogonal to the longitudinal direction. Furthermore, this leg is formed to ensure sealing the gap, even in case a size of the gap may vary along the circumference.

According to an example, the sealing member may be formed of an elastically deformable, particularly flexible, material.

Such material may be deformed when getting into contact, particularly pressing contact, with another component, e.g., the housing and/or the cover element, thereby causing a sealing effect. Furthermore, due to its flexible and/or elastic characteristics, the material may return into its initial, particularly undeformed, state, when removing the component being in contact with the sealing member. Thereby, the sealing member may ensure a sealing effect, when being in contact with the component, even if the contact with this component is repeatedly released. For example, the cover element may be movable between a closed state and an open state. The cover element may be in the open state while access to the interface is needed, e.g., for charging a battery of the vehicle. In case, charging is not needed, the cover element may usually be closed, thereby contacting the sealing member. Thus, the contact between the sealing member and the cover element may be removed or released every time the cover element is open. Every time, the contact between the sealing member and the cover element is released, e.g., by bringing the cover element in the open position, the sealing member returns its initial, particularly undeformed, state due to its elastic characteristics. Thus, the sealing member substantially deforms anew, every time, the cover element is closed and therefore, in contact with the sealing member. Thus, the sealing member may allow ensuring a sealing effect every time, the cover element is closed and thus, in contact with the sealing member, even if a relative position of the cover element with regard to the sealing member may be slightly different to a previous one, when the cover element is closed. For example, the sealing member may be formed of rubber.

According to an example, the cover element may comprise a lid and a hinge arm, the lid being movably connected to the housing via the hinge arm to releasably close the passage opening of the housing.

The hinge arm may be a cost-efficient, robust way of movably connecting the lid to the housing, thereby increasing lifetime of the cover element and/or the charging port assembly.

According to an example, the hinge arm and the lid may be integrally formed.

This may allow reducing the number of components. Additionally, or alternatively, an integral design may further increase robustness of the cover element and/or the charging port assembly. Alternatively, the lid may be fixed to the hinge arm by clips, hooks, adhesion, e.g., by being glued etc.

According to an example, the at least one protrusion may be arranged at the hinge arm.

To allow the lid being moved between the open and the closed state, at least an area of the cover element, particularly an area of the lid, where the hinge arm is arranged, may be arranged with small distance to the body part of the vehicle and or the sealing member. Such distance may be bridged by the at least one protrusion, thereby ensuring sealing off the inside of the charging port assembly along the entire circumference of the cover element, particularly the lid, when the cover element is closed.

According to a second aspect, there is provided a vehicle. The vehicle comprises a charging port assembly according to the first aspect.

The charging port assembly is reduced in size while being usable with interface members for different markets, particularly markets all over the world, e.g., Europe, the United States, China, Japan etc. The interface holding element may be formed individually for each of the different markets or may be uniformly shaped for all markets. This means, the interface holding element may be the same for all different markets. Furthermore, it may be possible that the interface member may be a common interface member, this means an interface member applicable in markets all over the world, e.g., Europe, the United States, China, Japan etc. The interface member may comprise a socket or an outlet being suitable for at least a specific plug, e.g., a European-type plug, an US-type plug etc., and particularly being suitable for all types of plugs, more particularly all types of plugs being used with charging station for charging vehicles.

The reduced size of the charging port assembly allows reducing the size of the cover element, thereby increasing a robustness of the cover element and the charging port assembly.

Furthermore, the charging port assembly allows a shallow housing, thereby reducing a risk of contamination, such as dust and/or water, being present inside the housing. Thus, lifetime of the charging port assembly may be prolonged, and thereby the need of maintenance of the vehicle may be reduced. Additionally, the shallow housing may be simpler to produce, thereby reducing costs, e.g., by allowing to simplify a tool for manufacturing the housing. Furthermore, a space for accommodating the charging port assembly in the vehicle may be reduced.

According to an example, the vehicle may further comprise an interface member being accommodated in interface holding element of the charging port assembly.

The interface member may be a common interface member being suitable or usable for at least two different markets, e.g., Europe and the United States, particularly all markets worldwide. Alternatively, the interface members of all markets may have a common interface being configured to fit the interface holding element.

According to an example, the vehicle may be a battery electric vehicle, a hybrid electric vehicle or a plug-in hybrid electric vehicle.

It should be noted that the above examples may be combined with each other irrespective of the aspect involved.

These and other aspects of the present disclosure will become apparent from and elucidated with reference to the embodiments described hereinafter.

### BRIEF DESCRIPTION OF DRAWINGS

Exemplary examples of the disclosure will be described in the following with reference to the following drawings.
- Fig. 1: shows schematically and exemplarily a charging port assembly according to the present disclosure.
- Fig. 2A: shows schematically and exemplarily a partial view of a charging port assembly according to the present disclosure.
- Fig. 2B: shows schematically and exemplarily a partial view of a charging port assembly according to the present disclosure.
- Fig. 2C: shows schematically and exemplarily a partial view of a charging port assembly according to the present disclosure.
- Fig. 3: shows schematically and exemplarily a charging port assembly according to the prior art.

The figures are merely schematic representations and serve only to illustrate examples of the disclosure. Identical or equivalent elements are in principle provided with the same reference signs.

### DESCRIPTION OF EMBODIMENTS

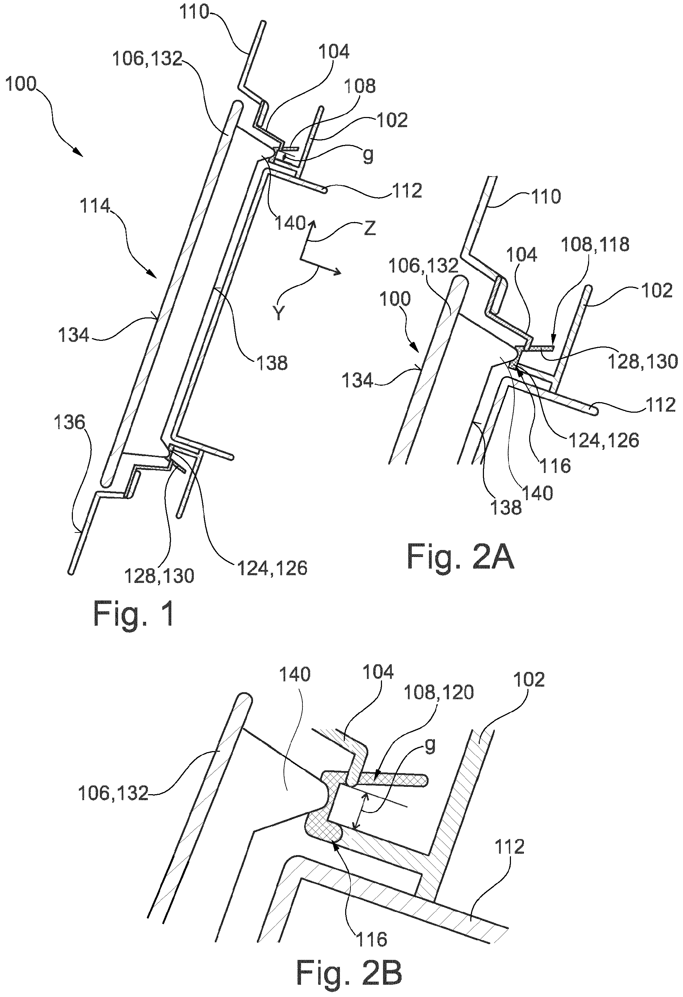

Figure 1 shows schematically and exemplarily a sectional view of an example of a charging port assembly 100 for a vehicle. The charging port assembly 100 comprises an interface holding element 102, a housing 104, a cover element 106 and a sealing member 108. The interface holding element 102 is insertable into the vehicle, e.g., as exemplarily shown in Figure 1, through an opening of a vehicle body part 110 and may be attached to the vehicle body part 110, e.g., via screws. The interface holding element 102 is configured to hold an interface member 112, e.g., a charging socket, in position.

The housing 104 is inserted into the opening of the vehicle body part 110 and mounted on the vehicle body part 110. The housing 104 has a passage opening 114 for providing access to the interface member 112 when the cover element 106 is in an open position. An inner circumference of the passage opening 114 is larger than an outer circumference of the interface holding element 102. The cover element 106 is configured to releasably close the passage opening 114 of the housing. In other words, the cover element 106 is movable between the open position, in which the interface member 112 is accessible from the outside, and a closed position, in which the cover element 106 covers, thus, closes, the passage opening 114, thereby preventing access to the interface member 112 from the outside.

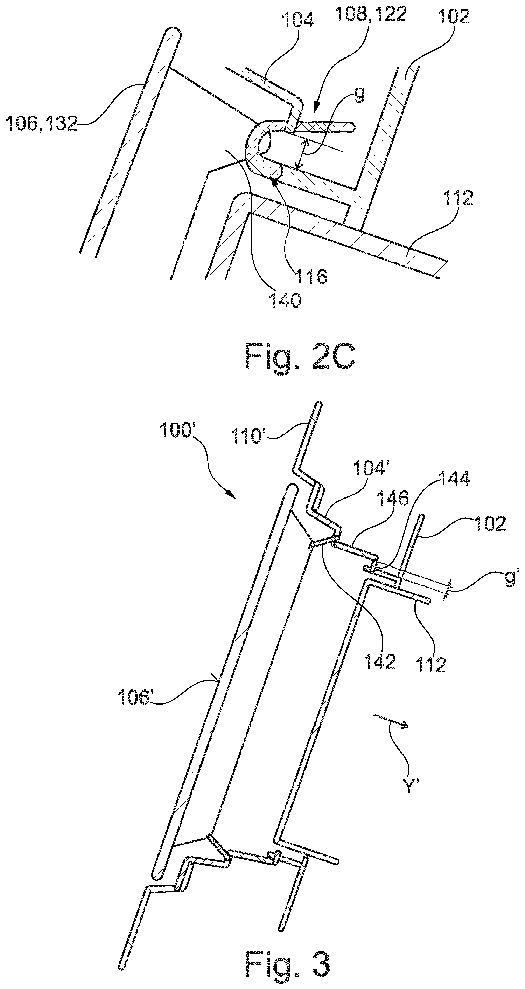

The sealing member 108 is arranged at the interface holding element 102, more precisely at an edge 116 of the interface holding element 102 facing towards the cover element 106, when the cover element 106 is in the closed position. The sealing member 108 is configured to sealingly connect the interface holding element 102 and the housing 104, and the sealing member 108 is configured to seal the passage opening 114 of the housing 104, when the cover element 106 is in the closed position. According to the example shown in Figure 1, the sealing member 108 is formed in one piece and has a L-like shaped profile 118 (see also Figure 2A). However, the sealing member 108 may have other profiles than the L-like shaped profile 118, e.g., a U-like shaped profile 120 (see Figure 2B) or a J-like shaped profile 122 (see Figure 2C).

Thus, a first part 124 of the sealing member 108, e.g., a first leg 126 of the L-like shaped profile 118, is at least partially arranged at the edge 116 of the interface holding element 102 and configured to be deformed by the cover element 106, when the cover element 106 is in the closed position, thereby sealing off the passage opening 114 of the housing 104. When the passage opening 114 of the housing 104 is sealed off, contamination of an inside of the charging port assembly 100, particularly an area around the interface member 112, is reduced or even prevented. In other words, the deformation of the sealing member 108 by the cover element 106 in the closed position prevents entry of foreign particles or fluids, like dust, water, snow etc.

A second part of 128 of the sealing member 108, e.g., a second leg 130 of the L-like shaped profile 118, is arranged outside the interface holding member 102 and extends in a direction away from the passage opening 114 of the housing 104. The second part 128 is configured to seal a gap g being formed between the housing 104 and the interface holding element 102, particularly between the inner circumference of the passage opening 114 and the outer circumference of the interface holding element 102. The gap g is formed in a direction Z substantially orthogonal to a longitudinal direction Y, wherein the longitudinal direction Y substantially corresponds to an extension direction of the passage opening 114 of the housing 104. A size of the gap g may differ due to position tolerances as well as manufacturing tolerances of the housing 104 and the interface holding element 102. In Figure 1, when seen in the longitudinal direction Y, the housing 104 and the interface holding element 102 overlap each other at least partially. Further, the second part 128 has an extension length being long enough to ensure sealing the gap g being formed by the overlap of the housing 104 and the interface holding element 102 regardless of deviations in the structure of the housing 104 and/or the interface holding element 102 due to tolerances. Furthermore, as exemplarily shown in Figure 1, the second part 128 extends obliquely with respect to the interface holding element 102. Thereby, the second part 128 of the sealing member 108 is able to compensate variations of the gap size along the circumference, thus ensuring a sealing connection between the housing 104 and the interface holding element 102 regardless of misalignment, e.g., due to positional tolerances.

With regard to Figures 2B and 2C, the sealing member 108 may have a U-like shaped profile 120 (see Figure 2B) or a J-like shaped profile 122 (see Figure 2C) instead of the L-like shaped profile 118 as exemplarily shown in Figures 1 and 2A. In other words, the sealing member 108 may have a profile of any shape that ensures sealing off the passage opening 114 of the housing 104 when the cover element 106 is in the closed position as well as sealingly connecting the housing 104 and the interface holding element 102.

The cover element 106 comprises a flap-like lid 132 and a hinge arm (not shown in the Figures), wherein the lid 132 is connected to the housing 104 via the hinge arm such that the lid 132 is movable between the open position and the closed position of the cover element 106. The lid 132 has an outer surface 134, which, in the closed position, is substantially arranged in the same plane as an outer surface 136 of the vehicle body part 110, and an inner surface 138, which, in the closed position, faces towards the interface member 112. Furthermore, the cover element 106 comprises a protrusion 140, which is arranged on the inner surface 138 and protrudes towards the sealing member 108. The protrusion 140 is configured to deform the sealing member 108, when the cover element 106 is in the closed position to ensure sealing off the passage opening 114 of the housing 104. In Figure 1, the protrusion 140 is exemplarily integrally formed with the inner surface 138 of the lid 132.

Figure 3 schematically shows an example of a charging port assembly 100' known from the state of the art. The charging port assembly 100' also comprises an interface holding element 102', a housing 104' and a cover element 106'. In contrast to the charging port assembly 100 of Figure 1, the charging port assembly 100' known in the art comprises two separate sealing members 142, 144 and a soft component wall 146. The sealing member 142 is configured to seal a contact between the cover element 106' and the housing 104'. The sealing member 144 is configured to seal a gap g' between the housing 104' and the interface holding element 102'. The soft component wall 146 is configured to compensate or handle the tolerances, particularly in the longitudinal direction Y' between the housing 104' and the interface holding element 102'.

The exemplary charging port assembly 100 shown in Figure 1 only comprises one sealing member 108, which fulfills the function of in total three components, namely the sealing member 142, 144 and the soft component wall 146 of the charging port assembly 100' known in the art. Thus, the charging port assembly 100 according to the example shown in Figure 1, is reduced in size, particularly compared to the charging port assembly 100' known in the art (see Figure 3). Specifically, the charging port assembly 100 allows the lid 132 being reduced in size, thereby having an increased robustness. Additionally, a smaller lid 132 improves the design of the charging port assembly 100. Furthermore, by having only one sealing member 108, the charging port assembly 100 allows a shallow housing 104, which allows simplifying the housing 104 and thereby simplifying a tool for producing the housing 104. A simplified tool allows reducing costs. Furthermore, a shallow housing 104 is easier kept clean from contamination.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 100, 100': charging port assembly
- 102, 102': interface holding element
- 104, 104': housing
- 106, 106': cover element
- 108: sealing member
- 110, 110': vehicle body part
- 112: interface member
- 114: passage opening
- 116: edge
- 118: L-like shaped profile
- 120: U-like shaped profile
- 122: J-like shaped profile
- 124: first part (of the sealing member)
- 126: first leg
- 128: second part (of the sealing member)
- 130: second leg
- 132: lid
- 134: outer surface (of the lid)
- 136: outer surface (of the vehicle body part)
- 138: inner surface (of the lid)
- 140: protrusion
- 142: sealing member
- 144: sealing member
- 146: soft component wall
- g, g': gap
- Y, Y': longitudinal direction
- Z: direction

## Claims

1. A charging port assembly (100) for a vehicle, comprising:
an interface holding element (102) being insertable into the vehicle and configured to hold an interface member (112) in position,
a housing (104) configured being mountable on the vehicle and having a passage opening (114) for providing access to the interface member (112),
a cover element (106) being configured to releasably close the passage opening (114) of the housing (104), and
a sealing member (108) being arranged at the interface holding element (102) and configured to sealingly connect the interface holding element (102) and the housing (104) and configured to be deformed when the cover element (106) is in a closed position to seal the passage opening (114) of the housing (104).

2. The charging port assembly (100) according to claim 1, the sealing member (108) being formed in one piece.

3. The charging port assembly (100) according to claim 1 or 2, the cover element (106) comprising at least one protrusion (140) protruding towards the sealing member (108) and configured to deform the sealing member (108), when the cover element (106) is in the closed position.

4. The charging port assembly (100) according to claim 3, the protrusion (140) forming a closed contour configured to deform the sealing member (108), when the cover element (106) is in the closed position to seal off the passage opening (114) circumferentially.

5. The charging port assembly (100) according to any of claims 1 to 4, an inner circumference of the passage opening (114) being larger than an outer circumference of the interface holding element (102).

6. The charging port assembly (100) according to claim 5, the sealing member (108) being arranged such that the sealing member (108) seals a circumferential gap (g) being formed between the inner circumference of the passage opening (114) and the outer circumference of the interface holding element (102).

7. The charging port assembly (100) according to claim 6, the gap (g) being substantially constant along the circumferences or the gap (g) varying along the circumferences.

8. The charging port assembly (100) according to any of claims 1 to 7, the sealing member (108) being at least partially arranged at an edge (116) of the interface holding element (102) facing towards the cover element (106) in the closed position.

9. The charging port assembly (100) according to any of claims 6 to 8, the sealing member (108) having a L-like shaped profile (118), one leg (126) of the L-like shaped profile (118) being at least partially arranged at the edge (116) of the interface holding element (102) facing towards the cover element (106) in the closed position and configured to be deformed by the cover element (106), when the cover element (106) is in the closed position, and another leg (130) of the L-like shaped profile (118) being arranged to seal the gap (g) between the inner circumference of the passage opening (114) and the outer circumference of the interface holding element (102).

10. The charging port assembly (100) according to claim 1 or 9, wherein the sealing member (108) is formed of an elastically deformable material.

11. The charging port assembly (100) according to any of claims 1 to 10, wherein the cover element (106) comprises a lid (132) and a hinge arm, the lid (132) being movably connected to the housing (104) via the hinge arm to releasably close the passage opening (114) of the housing (104).

12. The charging port assembly (100) according to claim 11, the at least one protrusion (140) being arranged at the hinge arm.

13. A vehicle, comprising a charging port assembly (100) according to any of claims 1 to 12.

14. The vehicle according to claim 13, further comprising an interface member (112) being accommodated in the interface holding element (102) of the charging port assembly (100).

15. The vehicle according to claim 13 or 14, the vehicle being a battery electric vehicle, a hybrid electric vehicle or a plug-in hybrid electric vehicle.

## Patentansprüche

1. Ladeanschlussanordnung (100) für ein Fahrzeug, Folgendes umfassend:
ein Schnittstellenhalteelement (102), das in das Fahrzeug einsetzbar und dazu ausgelegt ist, ein Schnittstellenelement (112) in Position zu halten,
ein Gehäuse (104), das dazu ausgelegt ist, an dem Fahrzeug montiert zu werden und eine Durchgangsöffnung (114) zum Vorsehen eines Zugangs zu dem Schnittstellenelement (112) aufzuweisen,
ein Abdeckelement (106), das dazu ausgelegt ist, die Durchgangsöffnung (114) des Gehäuses (104) lösbar zu verschließen, und
ein Dichtungselement (108), das an dem Schnittstellenhalteelement (102) angeordnet und dazu ausgelegt ist, das Schnittstellenhalteelement (102) und das Gehäuse (104) dichtend zu verbinden, und dazu ausgelegt ist, verformt zu werden, wenn sich das Abdeckelement (106) in einer geschlossenen Position befindet, um die Durchgangsöffnung (114) des Gehäuses (104) abzudichten.

2. Ladeanschlussanordnung (100) nach Anspruch 1, wobei das Dichtungselement (108) einstückig ausgebildet ist.

3. Ladeanschlussanordnung (100) nach Anspruch 1 oder 2, wobei das Abdeckelement (106) mindestens einen Vorsprung (140) umfasst, der in Richtung des Dichtungselements (108) vorsteht und dazu ausgelegt ist, das Dichtungselement (108) zu verformen, wenn sich das Abdeckelement (106) in der geschlossenen Position befindet.

4. Ladeanschlussanordnung (100) nach Anspruch 3, wobei der Vorsprung (140) eine geschlossene Kontur bildet, die dazu ausgelegt ist, das Dichtungselement (108) zu verformen, wenn sich das Abdeckelement (106) in der geschlossenen Position befindet, um die Durchgangsöffnung (114) in Umfangsrichtung abzudichten.

5. Ladeanschlussanordnung (100) nach einem der Ansprüche 1 bis 4, wobei ein Innenumfang der Durchgangsöffnung (114) größer als ein Außenumfang des Schnittstellenhalteelements (102) ist.

6. Ladeanschlussanordnung (100) nach Anspruch 5, wobei das Dichtungselement (108) so angeordnet ist, dass das Dichtungselement (108) einen Umfangsspalt (g) abdichtet, der zwischen dem Innenumfang der Durchgangsöffnung (114) und dem Außenumfang des Schnittstellenhalteelements (102) ausgebildet ist.

7. Ladeanschlussanordnung (100) nach Anspruch 6, wobei der Spalt (g) entlang der Umfänge im Wesentlichen konstant ist oder der Spalt (g) entlang der Umfänge variiert.

8. Ladeanschlussanordnung (100) nach einem der Ansprüche 1 bis 7, wobei das Dichtungselement (108) zumindest teilweise an einer Kante (116) des Schnittstellenhalteelements (102) angeordnet ist, die in der geschlossenen Position dem Abdeckelement (106) zugewandt ist.

9. Ladeanschlussanordnung (100) nach einem der Ansprüche 6 bis 8, wobei das Dichtungselement (108) ein L-förmiges Profil (118) aufweist, wobei ein Schenkel (126) des L-förmigen Profils (118) zumindest teilweise an dem Rand (116) des Schnittstellenhalteelements (102) angeordnet ist, der in der geschlossenen Position dem Abdeckelement (106) zugewandt ist, und dazu ausgelegt ist, durch das Abdeckelement (106) verformt zu werden, wenn sich das Abdeckelement (106) in der geschlossenen Position befindet, und ein anderer Schenkel (130) des L-förmigen Profils (118) so angeordnet ist, dass er den Spalt (g) zwischen dem Innenumfang der Durchgangsöffnung (114) und dem Außenumfang des Schnittstellenhalteelements (102) abdichtet.

10. Ladeanschlussanordnung (100) nach Anspruch 1 oder 9, wobei das Dichtungselement (108) aus einem elastisch verformbaren Material ausgebildet ist.

11. Ladeanschlussanordnung (100) nach einem der Ansprüche 1 bis 10, wobei das Abdeckelement (106) einen Deckel (132) und einen Scharnierarm umfasst, wobei der Deckel (132) über den Scharnierarm beweglich mit dem Gehäuse (104) verbunden ist, um die Durchgangsöffnung (114) des Gehäuses (104) lösbar zu schließen.

12. Ladeanschlussanordnung (100) nach Anspruch 11, wobei der mindestens eine Vorsprung (140) an dem Scharnierarm angeordnet ist.

13. Fahrzeug, umfassend eine Ladeanschlussanordnung (100) nach einem der Ansprüche 1 bis 12.

14. Fahrzeug nach Anspruch 13, ferner umfassend ein Schnittstellenelement (112), das in dem Schnittstellenhalteelement (102) der Ladeanschlussanordnung (100) aufgenommen ist.

15. Fahrzeug nach Anspruch 13 oder 14, wobei das Fahrzeug ein batterieelektrisches Fahrzeug, ein Hybrid-Elektrofahrzeug oder ein Plug-in-Hybrid-Elektrofahrzeug ist.

## Revendications

1. Ensemble port de charge (100) pour un véhicule, comprenant :
un élément de maintien d'interface (102) insérable dans le véhicule et conçu pour maintenir un élément d'interface (112) en position,
un boîtier (104) conçu pour pouvoir être monté sur le véhicule et présentant une ouverture de passage (114) pour donner accès à l'élément d'interface (112),
un élément couvercle (106) conçu pour fermer de manière amovible l'ouverture de passage (114) du boîtier (104), et
un élément d'étanchéité (108) disposé au niveau de l'élément de maintien d'interface (102) et conçu pour relier de façon étanche l'élément de maintien d'interface (102) et le boîtier (104) et conçu pour être déformé lorsque l'élément couvercle (106) est dans une position fermée afin d'obturer de manière étanche l'ouverture de passage (114) du boîtier (104).

2. Ensemble port de charge (100) selon la revendication 1, l'élément d'étanchéité (108) étant formé d'une seule pièce.

3. Ensemble port de charge (100) selon la revendication 1 ou 2, l'élément couvercle (106) comprenant au moins une saillie (140) faisant saillie vers l'élément d'étanchéité (108) et conçue pour déformer l'élément d'étanchéité (108), lorsque l'élément couvercle (106) est dans la position fermée.

4. Ensemble port de charge (100) selon la revendication 3, la saillie (140) formant un contour fermé conçu pour déformer l'élément d'étanchéité (108), lorsque l'élément couvercle (106) est dans la position fermée pour obturer de manière étanche circonférentiellement l'ouverture de passage (114).

5. Ensemble port de charge (100) selon l'une quelconque des revendications 1 à 4, une circonférence intérieure de l'ouverture de passage (114) étant plus grande qu'une circonférence extérieure de l'élément de maintien d'interface (102).

6. Ensemble port de charge (100) selon la revendication 5, l'élément d'étanchéité (108) étant conçu de sorte que l'élément d'étanchéité (108) obture de manière étanche un espace circonférentiel (g) formé entre la circonférence intérieure de l'ouverture de passage (114) et la circonférence extérieure de l'élément de maintien d'interface (102).

7. Ensemble port de charge (100) selon la revendication 6, l'espace (g) étant sensiblement constant le long des circonférences ou l'espace (g) variant le long des circonférences.

8. Ensemble port de charge (100) selon l'une quelconque des revendications 1 à 7, l'élément d'étanchéité (108) étant au moins partiellement disposé au niveau d'un bord (116) de l'élément de maintien d'interface (102) tourné vers l'élément couvercle (106) dans la position fermée.

9. Ensemble port de charge (100) selon l'une quelconque des revendications 6 à 8, l'élément d'étanchéité (108) présentant un profil en forme de L (118), une branche (126) du profil en forme de L (118) étant située au moins partiellement au niveau du bord (116) de l'élément de maintien d'interface (102) tourné vers l'élément couvercle (106) dans la position fermée et conçue pour être déformée par l'élément couvercle (106), lorsque l'élément couvercle (106) est dans la position fermée, une autre branche (130) du profilé en forme de L (118) servant à obturer de manière étanche l'espace (g) entre la circonférence intérieure de l'ouverture de passage (114) et la circonférence extérieure de l'élément de maintien d'interface (102).

10. Ensemble port de chargement (100) selon la revendication 1 ou 9, l'élément d'étanchéité (108) étant formé d'un matériau élastiquement déformable.

11. Ensemble port de chargement (100) selon l'une quelconque des revendications 1 à 10, l'élément couvercle (106) comprenant un couvercle (132) et un bras articulé, le couvercle (132) étant relié mobile au boîtier (104) par l'intermédiaire du bras articulé pour fermer de manière amovible l'ouverture de passage (114) du boîtier (104) .

12. Ensemble port de charge (100) selon la revendication 11, l'au moins une saillie (140) étant disposée au niveau du bras articulé.

13. Véhicule, comprenant un ensemble port de charge (100) selon l'une quelconque des revendications 1 à 12.

14. Véhicule selon la revendication 13, comprenant en outre un élément d'interface (112) logé dans l'élément de maintien d'interface (102) de l'ensemble port de charge (100).

15. Véhicule selon la revendication 13 ou 14, le véhicule étant un véhicule électrique à batterie, un véhicule électrique hybride ou un véhicule électrique hybride rechargeable.
